# FASCICULE DE BREVET EUROPEEN

(11) **EP 0 451 109 B1**
(45) Date de publication et mention de la délivrance du brevet: **26.04.1995**
(21) Numéro de dépôt: 91810231.0
(22) Date de dépôt: 28.03.1991
(51) Int. Cl.: B29C 47/58, F16K 11/074

(54) **Distributeur de flux**
Strömungsverteiler
Flow distributor

(30) Priorité: 03.04.1990 CH 1118/90
(43) Date de publication de la demande: 09.10.1991
(73) Titulaire: NOKIA-MAILLEFER HOLDING S.A., 1024 Ecublens-Lausanne (CH)
(72) Inventeur: Jaun, Hans, 1093 La Conversion (CH)
(74) Mandataire: Fischer, Franz Josef

(56) Documents cités:
- EP-A- 0 081 910
- EP-A- 0 221 231
- WO-A-87/02932
- WO-A-87/05258
- WO-A-88/08084
- DE-A- 2 921 943
- DE-A- 3 502 847
- DE-U- 8 810 965
- FR-A- 1 277 313
- PATENT ABSTRACTS OF JAPAN vol. 12, no. 142 (M-692)(2989) 30 Avril 1988& JP-A-62 264 925 (MITSUBISHI HEAVY IND LTD ) 17 Novembre 1987

## Description

Les documents de brevets FR-1 277 313, US-4 832 960, DE-2 912 943 sont des documents relatifs à l'utilisation dans l'art antérieur de distributeurs de flux liés à des installations d'extrusion. Ces documents montrent notamment que dans la production de fils électriques isolés ou de câbles, par extrusion d'une gaine de matière plastique sur un conducteur, on désire souvent pouvoir modifier la structure de l'isolant d'une façon rapide et sans perturber le fonctionnement de la ligne.

Les distributeurs connus sont toutefois des organes dont la fiabilité est difficile à assurer, étant donné qu'ils doivent fonctionner sous haute température et que la pression de la matière plastique en fusion atteint souvent des valeurs élevées. Ainsi, on utilise à l'heure actuelle des pressions de l'ordre de 1'100 bars dans des installations de ce genre.

Le but de la présente invention est de réaliser un distributeur de flux de construction simple et dont la fiabilité, dans l'application visée, soit meilleure que celle des distributeurs connus.

La présente invention a pour objet un distributeur de flux de matières plastiques en fusion sous haute pression dans une ligne d'extrusion comprenant
un cylindre de distributeur ayant un axe géométrique et traversé par au moins un canal d'entrée et un canal de sortie,
un corps de distributeur logé dans le cylindre, au moins un canal de distribution ménagé dans le corps de distributeur et reliant dans une position du corps un canal d'entrée et un canal de sortie,
et des moyens d'entraînement pour faire tourner le corps de distributeur autour dudit axe.

Pour atteindre le but indiqué plus haut, le distributeur selon l'invention comprend en outre les caractéristiques techniques mentionnées dans la partie caractérisante de la revendication indépendante, des formes d'exécution particulières étant décrites dans les revendications dépendantes.

Des distributeurs de fluide dans lesquels des canaux d'entrée et de sortie traversent le fond du cylindre, et où le corps de distributeur est pressé contre le fond du cylindre par un ressort, sont connus de DE-U-8'810'965. Toutefois, ils ne sont pas destinés à des applications telles que la distribution de matières plastiques en fusion, sous haute pression. En particulier, le dispositif décrit ici comporte, pour au moins une de ses positions de fonctionnement, un canal comprenant une zone morte où la matière stagne sans être entraînée. Ainsi ce dispositif ne peut être valablement utilisé pour des matières plastiques en fusion puisque de la matière ayant stagné dans cette zone morte se serait dégradée sous l'effet de la température.

On va décrire ci-après, à titre d'exemple, une forme d'exécution de l'objet de l'invention, en se référant au dessin annexé dont
la fig. 1 est une vue en coupe axiale du distributeur, et
la fig. 2 une vue en perspective simplifiée et schématique illustrant le fonctionnement du dispositif de la fig. 1.

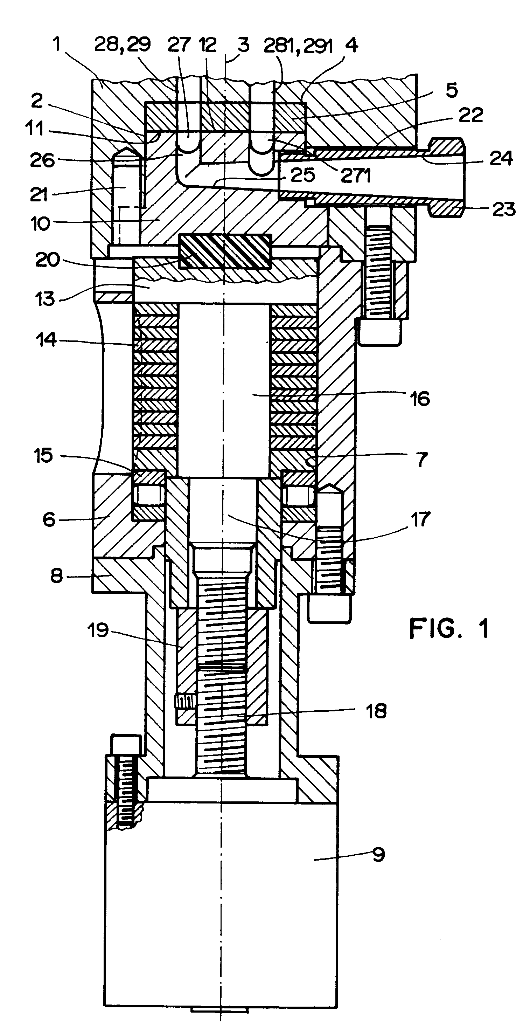

Le distributeur représenté à la fig. 1 comporte un cylindre 1, dans lequel est ménagé un logement 2 de forme cylindrique, avec un axe 3. Ce logement cylindrique 2 comporte un fond plat 4 contre lequel est plaqué un disque 5 fixé rigidement au cylindre et constitué d'un matériau résistant à l'usure. La face du disque 5, tournée vers le logement 2, est également plane et circulaire.

Du côté opposé au disque d'usure 5, le cylindre 1 est fixé sur une tête de cylindre 6 qui entoure un logement cylindrique désigné par 7 et s'étendant dans le prolongement du logement 2. Enfin, un socle également cylindrique 8 est fixé à la tête de cylindre 6 et porte le stator d'un moteur 9 dont la fonction sera décrite ci-après.

Le logement 2 est occupé par un corps de distributeur 10 qui présente une surface frontale plane 11, tournée vers la face correspondante 12 de la plaque d'usure 5. Un poussoir 13, engagé dans le logement 7, est sollicité par un empilage de rondelles élastiques 14. Celles-ci s'appuient sur un roulement 15, du type à galets, supporté sur un épaulement annulaire de la tête de cylindre 6. Le poussoir 13 est solidaire d'une tige 16 qui se prolonge vers le bas par un élément d'arbre 17 accouplé par un accouplement télescopique à l'arbre 18 du moteur 9. La douille 19 enserre l'arbre 17 et peut tourner avec lui dans le palier axial 15.

Finalement, une pièce intercalaire 20 est prévue entre le poussoir 13 et le corps de distributeur 10. Cette pièce intercalaire, en matériau isolant, maintient une certaine distance entre le poussoir et le corps de distributeur et évite les déperditions de chaleur qui autrement pourraient perturber aussi bien les fonctions des éléments élastiques 14 que le passage de la matière plastique dans le distributeur. Elle assure en outre l'accouplement entre le poussoir 13 et le corps de distributeur, grâce à la forme de son contour, ajustée aux logements ménagés dans les faces correspondantes du poussoir 13 et du corps 10.

Le moteur 9 qui peut être un moteur à réducteur, ou un moteur pas à pas, a pour fonction d'imprimer des mouvements de rotation au corps de distributeur 10 autour de l'axe 3. Comme on le voit à la fig. 1, le corps de distributeur a une forme étagée. Sa partie supérieure présente un diamètre restreint égal à celui du disque 5, tandis que sa partie inférieure forme une bride. Cette bride est interrompue sur un arc de cercle correspondant à l'amplitude maximale des mouvements possibles du corps de distributeur, et une goupille 21 plantée dans la face arrière du cylindre 1 limite les déplacements angulaires du corps de distributeur.

Le cylindre 1 comporte encore, à la hauteur de la partie du diamètre restreint du logement 2, une ouverture allongée 22, de sorte qu'un raccord 23 vissé dans un trou taraudé ménagé dans la face cylindrique du corps 10 peut se déplacer avec ce dernier lorsque le distributeur est commandé. L'alésage légèrement tronconique 24 du raccord 23 communique avec un conduit interne 25 perpendiculaire à l'axe 3 ménagé dans le corps 10. Ce conduit 25 communique lui-même en deux points diamétralement opposés par des segments axiaux 26 avec la face 11 du corps 10.

Cette face 11 comporte en outre deux zones de connexion sous forme de gorges en arc de cercle, ayant une extension de l'ordre de 90° et désignées par 27 et 271 à la fig. 1, ces gorges étant destinées à communiquer avec quatre conduits axiaux ménagés dans le cylindre 1 et à travers la plaque d'usure 5, de manière à présenter des embouchures dans la face de contact 12.

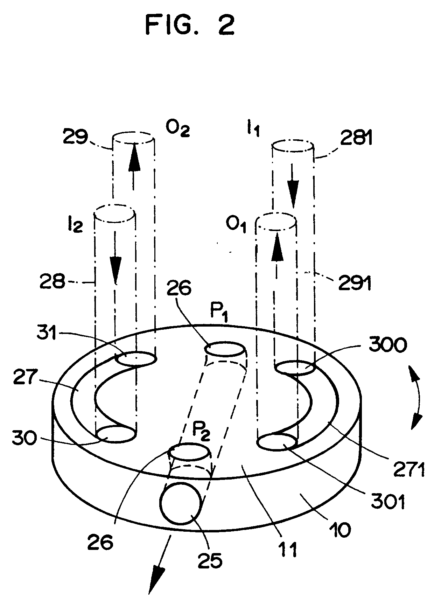

Pour comprendre la disposition des conduits d'entrée et de sortie 28 et 29, 281 et 291, et des embouchures, on se référera à la fig. 2 où l'on voit, schématiquement représentés, deux conduits d'entrée 28 et 281, deux conduits de sortie 29 et 291 ainsi que les embouchures 30 et 31 des conduits 28 et 29 et les embouchures 300 et 301 des conduits 281 et 291. La surface de contact 11 du corps 10, avec les gorges en arc de cercle 27 et 271, est également représentée à cette figure. On voit que dans la position représentée, le conduit d'entrée 28 (I₂) communique par la zone de connexion 27 avec le conduit de sortie 29 (0₂), tandis que le conduit d'entrée 281 (I₁) communique par la gorge de connexion 271 avec le conduit de sortie 291 (0₁). On se rend compte que si le corps 10 effectue, à partir de la position de la fig. 2, un mouvement de rotation dans le sens des aiguilles de la montre, sur un angle de 90°, le conduit d'entrée 281 sera mis en communication, par la gorge 27, avec le conduit de sortie 29, tandis que le conduit d'entrée 28 sera mis en communication, par la gorge de connexion 271, avec le conduit de sortie 291.

Le canal de purge 25 est alors orienté à 90° de la position qu'il occupe à la fig. 2 et, par conséquent, ses embouchures sont également obturées. En revanche, si le mouvement de rotation décrit précédemment est interrompu à mi-parcours, l'un des segments de conduit 26 est en communication avec l'embouchure 300, tandis que l'autre est en communication avec l'embouchure 30 et, par conséquent, les deux conduits d'entrée 28 et 281 sont reliés à la purge.

La construction décrite permet d'établir des communications variées entre les différents conduits d'entrée et de sortie du cylindre 1. Un distributeur de ce genre peut être incorporé par exemple à une ligne d'extrusion capable de produire un fil électrique isolé dont la gaine isolante comporte une pellicule superficielle colorée et dont la couleur est susceptible d'être changée instantanément d'une première valeur à une deuxième valeur et vice versa. Pour cela, le corps de distributeur comporte deux gorges de connexion et le cylindre de distributeur comporte deux conduits d'entrée et deux conduits de sortie.

Toutefois, on peut concevoir d'autres formes d'exécution d'un distributeur, plus sophistiquées, comportant un plus grand nombre de conduits d'entrée et de conduits de sortie, le nombre des conduits d'entrée et de sortie n'étant pas nécessairement le même. L'homme du métier sera capable, sur la base de l'exemple décrit, de construire des distributeurs correspondants à des exigences plus compliquées que celles auxquelles satisfait le dispositif décrit.

On notera que l'emploi de l'empilage de rondelles élastiques 14 permet d'assurer une pression relativement élevée du corps de distributeur contre la face de contact 12 de la pièce d'usure 5. L'utilisation d'un arbre à accouplement extensible entre le moteur 9 et la tige de poussoir 16, permet de tenir compte de l'élasticité des rondelles ainsi que de l'usure éventuelle de la surface 12.

Cependant, on pourrait également prévoir, en lieu et place des éléments 14, un système hydraulique agissant sur la face arrière du poussoir 13. Dans ce cas, la valeur de la pression agissant sur ce poussoir pourrait être modifiée. Les mouvements de rotation du corps de distributeur pourraient alors être effectués sans que ce corps soit sous pression, de sorte que l'usure serait réduite.

L'ensemble formé par les moyens de pression, les moyens d'entraînement en rotation et le corps de distributeur est monté rotativement et tourne avec une résistance au frottement minimal grâce à la disposition du palier à roulement 15. Celui-ci assure la fiabilité du distributeur au point de vue usure et sécurité de fonctionnement aux hautes températures. Comme on le voit au dessin, la tête de cylindre 6 peut être largement échancrée pour maintenir le moteur et les rondelles élastiques à une température convenable. La pièce 20 assure une fonction d'isolation qui évite des pertes thermiques.

## Revendications

1. Distributeur de flux de matières plastiques en fusion sous haute pression, dans une ligne d'extrusion, comprenant un cylindre de distributeur (1) ayant un axe géométrique (3) et traversé par au moins un canal d'entrée (28,281) et un canal de sortie (29,291), un corps de distributeur (10) logé dans le cylindre (1), au moins un canal de distribution (27,271) ménagé dans le corps de distributeur (10) et reliant dans une position du corps un canal d'entrée (28,281) et un canal de sortie (29,291), et des moyens d'entraînement (9,13,16,17,18, 20) pour faire tourner le corps de distributeur (10) autour dudit axe (3),
caractérisé en ce que
le cylindre (1) comporte un fond (5) avec au moins deux canaux d'entrée (28,281) et deux canaux de sortie (29,291), qui le traversent axialement, et en ce que le corps de distributeur (10) comporte au moins deux canaux de distribution (27,271) capables de faire communiquer chacun un canal d'entrée du cylindre avec un canal de sortie, la configuration desdits canaux étant telle que les liaisons établies entre les canaux d'entrée et de sortie sont différentes suivant la position angulaire du corps de distributeur (10) par rapport au cylindre (1), et ne traversent pas le corps du distributeur (10), et en ce que lesdits canaux de distribution (27,271) sont aménagés de manière à ce que leurs extrémités sont reliées à un conduit d'entrée ou de sortie (28,29,281, 291) pour toutes les positions de travail dudit corps de distributeur (10).

2. Distributeur selon la revendication 1, caractérisé en ce que les canaux de distribution (27,271) sont des creusures en arc de cercle ménagées dans la face frontale (11) du corps du distributeur (10).

3. Distributeur selon la revendication 1, caractérisé en ce que le corps de distributeur (10) comporte dans sa masse un conduit de purge (25) débouchant dans ladite face frontale du corps de distributeur par au moins une ouverture (26).

4. Distributeur selon la revendication 3, caractérisé en ce que le corps de distributeur (10) porte un raccord (23) qui s'étend à l'extérieur du cylindre (1) et qui communique avec le conduit de purge (25).

5. Distributeur selon la revendication 4, caractérisé en ce que le raccord (23) traverse une ouverture (22) en arc de cercle de la paroi du cylindre (1), de manière à pouvoir tourner avec le corps de distributeur (10) d'un angle suffisant pour assurer les connexions entre les canaux d'entrée (28,281) et les canaux de sortie (29,291).

6. Distributeur selon l'une des revendications précédentes, caractérisé en ce qu'il comprend en outre des moyens de pression (14) mobiles (15) en rotation avec le corps du distributeur, pressant ce dernier contre le fond du cylindre (5) à l'encontre de la pression des matières fluides.

7. Distributeur de flux selon la revendication 6, caractérisé en ce que les moyens d'entraînement (9,13,16,17,18, 20) comportent un moteur (9) dont le rotor est coaxial au cylindre (1) et un moyen de liaison extensible (18) entre le rotor du moteur (9) et le corps du distributeur (10).

8. Distributeur selon l'une des revendication 6 ou 7, caractérisé en ce que les moyens de pression (14) sont disposés autour du moyen de liaison (16) et s'appuient d'une part sur un palier axial (15) et d'autre part sur un élément d'appui solidaire (13) en rotation du moyen de liaison.

9. Distributeur selon l'une des revendication précédentes, caractérisé en ce que le fond du cylindre (1) comprend une plaque d'usure (5) dont une face présente une surface (12) tournée vers le corps de distributeur (10).

10. Distributeur selon la revendication 6, caractérisé en ce que les moyens de pression comportent un empilage de rondelles élastiques (14).

11. Distributeur selon la revendication 6, caractérisé en ce que les moyens de pression comportent un piston soumis à l'action d'un fluide.

12. Distributeur selon la revendication 8, caractérisé en ce que lesdits moyens de pression et lesdits moyens d'entraînement comportent en commun un organe rigide de contour non circulaire (20), en un matériau d'isolation thermique engagé dans des logements du corps de distributeur (10) et de l'élément d'appui (13), et maintenant ces deux parties écartées l'une de l'autre.

## Claims

1. A distributor of the flow of molten plastic materials under high pressure in an extrusion installation, comprising a distributor cylinder (1) having a geometrical axis (3) and traversed by at least one intake duct (28, 281) and one outlet duct (29, 291), a distributor body (10) disposed in the cylinder (1), at least one distribution duct (27, 271) disposed in the distributor body (10) and connecting in one position of the body an intake duct (28, 281) and an outlet duct (29, 291), and drive means (9, 13, 16, 17, 18, 20) for causing the distributor body (10) to rotate about the said axis (3),
characterized in that
the cylinder (1) includes a bottom (5) with at least two intake ducts (28, 281) and two outlet ducts (29, 291) which traverse it axially, and in that the distributor body (10) includes at least two distribution ducts (27, 271) each capable of connecting an intake duct of the cylinder with an outlet duct, the configuration of the said ducts being such that the connections established between the intake and outlet ducts are different according to the angular position of the distributor body (10) with respect to the cylinder (1), and do not traverse the distributor body (10), and in that the said distribution ducts (27, 271) are arranged in a manner so that their ends are connected to an intake or outlet duct (28, 29, 281, 291) for all of the working positions of the said distributor body (10).

2. The distributor according to claim 1, characterized in that the distribution ducts (27, 271) take the form of arcuate hollows arranged in the frontal face (11) of the distributor body (10).

3. The distributor according to claim 1, characterized in that the distributor body (10) includes in its mass a drain conduit (25) opening in the said frontal face of the distributor through at least one aperture (26).

4. The distributor according to claim 3, characterized in that the distributor body (10) has a coupling (23) which extends on the exterior of the cylinder (1) and which communicates with the drain conduit (25).

5. The distributor according to claim 4, characterized in that the coupling (23) traverses an arcuate aperture (22) in the wall of the cylinder (1) in a manner to be able to turn with the distributor body (10) at an angle sufficient to ensure the connections between the intake ducts (28, 281) and the outlet ducts (29, 291).

6. The distributor according to one of the preceding claims, characterized in that it includes in addition pressure means (14) rotatingly mobile (15) with the distributor body, pressing the latter against the bottom of the cylinder (5) counter to the pressure of the fluid materials.

7. Distributor of flow according to claim 6, characterized in that the drive means (9, 13, 16, 17, 18, 20) comprise a motor (9) whose rotor is coaxial with the cylinder (1) and an extensible connection means (18) between the rotor of the motor (9) and the distributor body (10).

8. The distributor according to one of the claims 6 or 7, characterized in that the pressure means (14) are disposed about the connection means (16) and resting at one end against a thrust bearing (15) and at the other end against a support element (13) integral with the connection means for rotation therewith.

9. The distributor according to one of the preceding claims, characterized in that the bottom of the cylinder (1) is composed of a wear plate (5) whose face has a surface (12) turned toward the distributor body (10).

10. The distributor according to claim 6, characterized in that the pressure means comprise a stack of elastic washers (14).

11. The distributor according to claim 6, characterized in that the pressure means comprise a piston subjected to the action of a fluid.

12. The distributor according to claim 8, characterized in that the said pressure means and the said drive means jointly comprise a rigid part of non-circular contour (20) made of a thermally insulating material fitted in recesses of the distributor body (10) and of the support element (13) and keeping these two parts spaced apart from one another.

## Patentansprüche

1. Verteiler in einem Extrusionssystem für Ströme von Kunststoffmaterialien, die schmelzflüssig und unter hohem Druck sind, mit einem Verteilzylinder (1), der eine geometrische Achse (3) aufweist und von mindestens einem Eingangskanal (28, 281) und einem Ausgangskanal (29, 291) durchquert ist, mit einem Verteilkörper (10), der im Zylinder (1) angeordnet ist, mit mindestens einem Verteilkanal (27, 271), der im Verteilkörper (10) enthalten ist und in einer Körperstellung einen Eingangskanal (28, 281) und einen Ausgangskanal (29, 291) miteinander verbindet, sowie mit Antriebsmitteln (9, 13, 16, 17, 18, 20), um den Verteilkörper (10) um die genannte Achse (3) zu drehen, dadurch gekennzeichnet, dass der Zylinder (1) einen Boden (5) mit mindestens zwei Eingangskanälen (28, 281) und zwei Ausgangskanälen (29, 291) umfasst, welche Kanäle den Boden in axialer Richtung durchqueren, dass der Verteilkörper (10) mindestens zwei Verteilkanäle (27, 271) umfasst, wobei jeder davon befähigt ist, einen Eingangskanal des Zylinders mit einem Ausgangskanal zu verbinden, wobei die Konfiguration der Kanäle derart ist, dass die erstellten Verbindungen zwischen den Eingangskanälen und den Ausgangskanälen je nach der Winkelstellung des Verteilkörpers (10) zum Zylinder (1) unterschiedlich sind und den Verteilkörper (10) nicht durchqueren und dass die Verteilkanäle (27, 271) derart ausgeführt sind, dass ihre Enden für alle Arbeitspositionen des Verteilkörpers (10) mit einer Eingangsleitung oder Ausgangsleitung (28, 29, 281, 291) verbunden sind.

2. Verteiler nach Anspruch 1, dadurch gekennzeichnet, dass die Verteilkanäle (27, 271) kreisbogenförmige Vertiefungen in der Frontseite (11) des Verteilkörpers (10) sind.

3. Verteiler nach Anspruch 1, dadurch gekennzeichnet, dass der Verteilkörper (10) in seinem Innern eine Abführleitung (25) umfasst, die über mindestens eine Öffnung (26) in die genannte Frontseite des Verteilkörpers mündet.

4. Verteiler nach Anspruch 3, dadurch gekennzeichnet, dass der Verteilkörper (10) ein Verbindungsstück (23) aufweist, das sich auf die Aussenseite des Zylinders (1) erstreckt und das mit der Abführleitung (25) verbunden ist.

5. Verteiler nach Anspruch 4, dadurch gekennzeichnet, dass das Verbindungsstück (23) eine kreisbogenförmige Öffnung in der Wand des Zylinders (1) durchquert, derart, dass es mit dem Verteilkörper (10) um einen Winkel gedreht werden kann, der genügend gross ist, um die Verbindungen zwischen den Eingangskanälen (28, 281) und den Ausgangskanälen (29, 291) herzustellen.

6. Verteiler nach einem der Ansprüche 1 bis 5, dadurch gekennzeichnet, dass er im weiteren Druckmittel (14) und bewegliche Mittel (15) umfasst, die zusammen mit dem Verteilkörper drehbar sind und den letzteren entgegen des Druckes der flüssigen Materialien gegen den Boden (5) des Zylinders drücken.

7. Verteiler nach Anspruch 6, dadurch gekennzeichnet, dass die Antriebsmittel (9, 13, 16, 17, 18, 20) einen Motor (9) umfassen, dessen Rotor koaxial zum Zylinder (1) ist und ein ausdehnbares Verbindungsmittel (18) zwischen dem Rotor des Motors (9) und dem Verteilkörper (10) aufweisen.

8. Verteiler nach Anspruch 6 oder 7, dadurch gekennzeichnet, dass die Druckmittel (14) um ein Verbindungsmittel (16) herum angeordnet sind und einerseits auf einer axialen Lagerschulter und andererseits auf einem Stützelement (13) anlegen, welches mit dem Verbindungsmittel drehverbunden ist.

9. Verteiler nach einem der Ansprüche 1 bis 8, dadurch gekennzeichnet, dass der Boden des Zylinders (1) eine Verschleissplatte (5) aufweist, deren eine Seite eine Oberfläche (12) aufweist, die gegen den Verteilkörper (10) gerichtet ist.

10. Verteiler nach Anspruch 6, dadurch gekennzeichnet, dass die Druckmittel einen Stapel von elastischen Scheiben (14) umfassen.

11. Verteiler nach Anspruch 6, dadurch gekennzeichnet, dass die Druckmittel einen Kolben umfassen, der unter die Wirkung eines Fluides gesetzt ist.

12. Verteiler nach Anspruch 8, dadurch gekennzeichnet, dass die Druckmittel und die Antriebsmittel gemeinsam ein starres Organ (20) mit einem nicht kreisförmigen Umfang und aus einem thermisch isolierenden Material aufweisen, welches je in einen Lagersitz des Verteilkörpers (10) und des Stützelementes (13) eingreift und diese beiden Teile beabstandet voneinander hält.
